# EUROPÄISCHE PATENTANMELDUNG

(11) **EP 2 090 527 A1**
(43) Veröffentlichungstag der Anmeldung: **19.08.2009**
(21) Anmeldenummer: 08405049.1
(22) Anmeldetag: 18.02.2008
(51) Int. Cl.: B65D 75/36, B65D 75/34, A61J 1/03

(54) **Blisterverpackung**

(71) Anmelder: Alcan Technology & Management Ltd., 8212 Neuhausen am Rheinfall (CH)
(72) Erfinder: Pasbrig, Erwin, 78224 Singen (DE)

(57) **Zusammenfassung**

Bei einer Blisterverpackung (60) mit einem wenigstens ein Behältnis (52) zur Aufnahme eines Füllgutes (54) aufweisenden Bodenteil (50) und einer gegen das Bodenteil (50) gesiegelten und das wenigstens eine Behältnis (52) verschliessenden Deckfolie (10, 20, 30, 40) weist die Deckfolie (10, 20, 30, 40) ein Trägermaterial aus Papier und/oder Kunststoff auf und ist metallfolienfrei.

## Beschreibung

Die Erfindung betrifft eine Blisterverpackung mit einem wenigstens ein Behältnis zur Aufnahme eines Füllgutes aufweisenden Bodenteil und einer gegen das Bodenteil gesiegelten und das wenigstens eine Behältnis verschliessenden Deckfolie.

Bei Blisterverpackungen für kosmetische, pharmazeutische und medizinaltechnische Produkte, Diagnostika und Nahrungsergänzungsmittel, aber auch andere, in einem Blister mit mindestens einer Kavität verpackte Produkte, werden die in einem Bodenteil angeordneten Behältnisse überwiegend mit einer auf der Aussenseite lackierten, kaschierten oder lackierten und kaschierten Aluminiumfolie verschlossen. Die Öffnung der Verpackung erfolgt durch Durchdrücken, Peelen, Peel-Push, Aufreissen oder Aufschneiden der Aluminium-Deckfolie.

Wenn die Behältnisse durch Thermoformung oder Formung entsprechender Kunststoffe hergestellt werden, dann ist die Barriere gegen Aromastoffe, Gerüche, gasförmige Stoffe, Feuchtigkeit und Sauerstoff aus dem oder in den Behälter durch die dünnste Stelle charakterisiert. Die als Deckfolie eingesetzte Aluminiumfolie weist überwiegend eine Dicke von 15 bis 30 µm, im Verbund mit Papier 7 bis 12 µm, auf und verringert oder verhindert eine Migration bzw. Diffusion der oben genannten Stoffe von der oberen Seite, d.h. von der Öffnung, in den Behälter mit dem Füllgut.

Der Erfindung liegt die Aufgabe zugrunde, für heutzutage übliche Blisterverpackungen nach Möglichkeit kostengünstigere Ausführungen anzubieten.

Zur erfindungsgemässen Lösung der Aufgabe führt, dass die Deckfolie ein Trägermaterial aus Papier und/oder Kunststoff enthält und metallfolienfrei ist.

Die Grundidee der Erfindung basiert auf der Erkenntnis, dass, wenn keine absolute Barriere erforderlich ist, auch Materialien ohne Aluminium- oder andere Metallfolien als Deckschicht verwendet werden können, solange die Entnahme und die Schutzfunktion gewährleistet sind.

Wenn also das Blisterbodenteil nicht aus einem Material mit sehr hoher Barrierewirkung, wie z.B. Formpack^{®} (Bodenmaterial aus Aluminium), Laminate mit Hochbarriere, wie z.B. 250 µm PVC/120 g/m² PVDC oder Laminate mit Aclar^{®} (z.B. 250 µm PVC/Ultrex 2000 bis 4000) besteht, dann ist es auch nicht zwingend erforderlich, zum Verschliessen der Bodenteile eine Deckfolie mit hoher Barrierewirkung zu verwenden.

Neben der Barrierefunktion und der unterschiedlichen Entnahme hat die Deckfolie den Zweck, das Produkt gegen Herausfallen, Kontamination und mechanische Beeinflussung zu schützen.

Als Basis- oder Trägermaterialien zur Versiegelung der geformten Behälter bzw. Blisterbodenteile können verwendet werden:
- Alle Arten von Papier
- Folien aus Kunststoffen, gegebenenfalls beschichtet, lackiert oder mit aluminiumfolienfreien Materialien kaschiert. Zur Erzielung einer gewünschten Barrierewirkung können Schichten aus organischen, anorganischen oder metallischen Materialien, oder Kombinationen der genannten Materialien, auf einer oder mehreren Folien, z.B. durch Aufdampfen, aufgebracht sein.

Zum Öffnen von Blisterverpackungen zur Entnahme von Füllgut bekannte Systeme umfassen u.a. beispielsweise das Durchdrücken des Füllgutes, z.B. einer Tablette, aus dem napfförmigen Behältnis durch die Deckfolie, das Öffnen des napfförmigen Behältnisses durch Peelen der Deckfolie oder das Peelen einer Teilschicht der Deckfolie mit anschliessendem Durchdrücken der Tablette durch eine durch Peelen der ersten Teilschicht freigelegte zweite Teilschicht (Peel-Push Systeme). Die Öffnung der Blisterverpackungen kann aber auch durch Aufreissen oder Aufschneiden erfolgen. Durch entsprechende Materialkombinationen können Deckfolien erhalten werden, welche entsprechend den genormten Vorschriften kindergesichert und erwachsenenfreundlich sind (CR/SF). Bei transparenten Ausführungen und entsprechender Auswahl der Folien oder Folienkombinationen kann der gesiegelte Behälter auch UV-sterilisiert werden.

Die Deckfolien können mit allen üblichen Druckverfahren, auch auf den Abpackanlagen, bedruckt werden. Dies schließt Arten der Bedruckung für Fälschungssicherheit und Kombinationen mit nicht sichtbaren Merkmalen, wie z.B. Taggents, UV- und IR-Farben, mit ein.

Die Versiegelung erfolgt gegen einen Behälter bzw. ein Blisterbodenteil mit einer Siegelschicht aus:
- PVC
- PVDC
- COC
- COP
- PP
- PE
- PE-Metallozen
- PP-Metallozen
- Aclar^{®}
- Polyester, z.B. PET
- Polyamid
- Polyacrylnitril (Barex^{®})
- Polystyrol
- lonomer, z.B. Surlyn^{®}, Bynel^{®}
- Papier
- PEN
- Lack
- Metall, z.B. Aluminium, Eisen, Kupfer und Legierungen daraus
- organische Beschichtung
- anorganische Beschichtung
- metallische Beschichtung

Der Behälter bzw. das Blisterbodenteil selbst kann auch aus einem dieser Materialien oder aus Kombinationen der genannten Materialien bestehen, einschliesslich Laminate mit Aclar^{®}.

Die Deckfolie kann bestehen aus Papier, z.B. Standard, satiniert, gestrichen, beschichtet, Pergamentpapier oder Pergaminpapier, bevorzugt mit einer Grammatur von 10 bis 150 g/m², vorzugsweise 17 bis 60 g/m², mit einer Siegelschicht aus:
- PVC
- PVDC
- COC
- COP
- Polypropylen
- Polyethylen
- PE/PBU
- PE-Metallozen
- PP-Metallozen
- Aclar^{®}
- Polyester
- Polyamid
- Polystyrol
- Polyacrylnitril (Barex^{®})
- lonomer, z.B. Surlyn^{®}, Bynel^{®}
- Polymer aus nachwachsenen Rohstoffen
- PEN
- Polycarbonat
- Lack
- organische Beschichtung, z.B. Apeel^{®}

Geeignete Lacke sind z.B. Lacke auf der Basis von Acrylaten, z.B. PMMA, Polyester, PVC, Polypropylene und Mischpolymerisate, z.B. VMCH, PVAC und/oder Mischungen derselben. Die Formulierung kann wässrig oder auf Basis organischer Lösemittel sein.

Papier kann auch ohne Siegelschicht eingesetzt werden, so dass Papier gegen das Siegelmedium des Behälters bzw. des Blisterbodenteils siegelt. Es können auch zwei Papiere zusammenkaschiert sein, z.B. Pergaminpapier mit satiniertem oder gestrichenem Papier.

Auf der Aussenseite, bezogen auf den später mit der Deckfolie verschlossenen Verpackungsbehälter, kann das Papier mit hitzepressfesten Lacken, z.B. auf Basis von Nitrozellulose, Epoxy, Acrylat, Polyurethan oder Melaminharzen, lackiert, beschichtet, z.B. mit Polyester, Polycarbonat, oder kaschiert sein. Die Kaschierfolien können nicht, monoaxial oder biaxial orientiert sein und anorganische Stoffe, z.B. Talkum, TiO₂, SiO₂, Al₂O₃ oder CaCO₃, enthalten. Die Dicke der Kaschierfolien liegt bevorzugt im Bereich von 3 bis 150 µm, vorzugsweise 5 bis 60 µm. Kaschierfolien können z.B. sein:
- Polypropylen
- Polyamid
- Polyester
- PEN
- Polycarbonat

Für Peel- und Peel-Push-Öffnungsmechanismen kann die Deckfolie auch aus einem Laminat aus dünnen Kunststofffolien bestehen, wobei eine Innen-, Aussen- oder Mittelfolie anorganische Stoffe, z.B. Talkum, TiO₂, SiO₂, Al₂O₃ oder CaCO₃, enthalten kann. Solche Laminate können z.B. bestehen aus:
- PVC
- PVDC (Folie und/oder Beschichtung)
- COC
- COP
- Polypropylen
- Polyethylen
- PE-Metallozen
- PP-Metallozen
- Aclar^{®}
- Polyamid
- Polyester
- Polystyrol
- Polyacrylnitril (Barex^{®})
- lonomer, z.B. Surlyn^{®}, Bynel^{®},
- Polymere aus nachwachsenen Rohstoffen
- PEN
- Polycarbonat
- Acrylat

Die Dicke dieser Laminate liegt bevorzugt im Bereich von 7 bis 150 µm, vorzugsweise 20 bis 100 µm. Die Kunststofffolien können beispielsweise Blasfolien oder Kalanderfolien sein. Weiter können die Kunststofffolien nicht, monoaxial, biaxial orientiert, kreuz-kaschiert (z.B. Valeron^{®}), woven oder non- woven sein.

Die vorstehend genannten Kunststofffolien können auch in der Form von Einzelfolien als Deckfolien gegen das Blisterbodenteil gesiegelt werden. Bei nicht ausreichender Hitzepressfestigkeit der Folie kann die Folie - analog zu Papier - entsprechend überlackiert werden.

Die Kaschierung kann über lösemittelhaltige, lösemittelfreie oder wässrige Kaschierkleber, auch als Extrusionskaschierung, erfolgen. Auch Klebstoffe, die unter Einwirkung von Strahlen, wie z.B. UV-, IR- und Elektronen-Strahlen, aushärten, können eingesetzt werden. Beispiele von Kaschierklebern sind lösungsmittelhaltige, lösungsmittelfreie oder wässrige Acrylatkleber, Polyurethan-Kleber-Systeme oder Kasein-Latex.

Zur Erhöhung der Barrierewirkung und optischer Erscheinung können die Papiere und/oder die Kunststofffolien mit organischen, anorganischen oder metallische Schichten, oder Kombinationen daraus, bedampft und/oder gesputtert sein.

Die Dicke der Kunststofffolien und/oder der Beschichtung liegt bevorzugt im Bereich von 3 bis 150 µm, vorzugsweise 4 bis 60 µm. Eine PVDC-Beschichtung liegt bevorzugt im Bereich von 2 bis 150 g/m², vorzugsweise 10 bis 120 g/m².

Die Verbindung der Deckfolien mit dem Behälter bzw. mit dem Blisterbodenteil erfolgt durch Siegelung unter Anwendung von Druck und Energie. Die Energie kann in Form von Wärme, Mikrowellen, Ultraschall, andere energiereiche Strahlen oder induktiv zugeführt werden. Bei Verwendung von Kaltsiegelmedien kann die Versiegelung auch nur durch den entsprechenden Siegeldruck erfolgen.

Beispiele von Deckfolien sind in der nachfolgenden Tabelle aufgeführt. Kaschiermedien und Haftvermittler sind nicht angeführt, da diese zum Stand der Technik gehören und Kunststofffolien auch durch Heisskalandrierung mit dem Partnermedium verbunden werden können. Die Kunststofffolien und -beschichtungen können mit anorganischen Stoffen gefüllt sein, z.B. Talkum, TiO₂, SiO₂, Al₂O₃ oder CaCO₃. Zur Erzielung einer höheren Barrierewirkung und/oder optischer Erscheinung können organische, anorganische oder metallische Schichten, oder Kombinationen aus den genannten Schichten, auf eine oder mehrere Folien, z.B. durch Aufdampfen und/oder Sputtern, aufgebracht sein.

**Tabelle: Beispiele von Deckfolien**

| **Nr.** | **Aussenseite** | | | | | | | |
|---|---|---|---|---|---|---|---|---|
| 1 | PET | 5 µm | PVC | 15 µm | | | | |
| 2 | PET | 6 µm | PE/PBU | 30 µm | | | | |
| 3 | PET | 12 µm | Polyacrylnitril | 25 µm | PE | 20 g/m² | | |
| 4 | PET | 23 µm | PVC | 30 µm | | | | |
| 5 | PET | 23 µm | A-peel | 15 g/m² | | | | |
| 6 | Pergaminpapier | 35 g/m² | PVC | 15 µm | | | | |
| 7 | Papier, satiniert | 25 g/m² | PET | 6 µm | | | | |
| 8 | Papier, gestrichen | 40 g/m² | Lack (PVAC, Acrylat) | 10 g/m² | | | | |
| 9 | Papier | 25 g/m² | monax PP | 30 µm | | | | |
| 10 | Papier | 25 g/m² | PVDC | 40 g/m² | PE | 15 g/m² | | |
| 11 | Papier | 40 g/m² | PET | 12 µm | PVC | 20 µm | | |
| 12 | Papier, gestrichen | 50 g/m² | PET | 12 µm | PP-Lack | 7 g/m² | | |
| 13 | oPA | 15 µm | Surlyn | 18 g/m² | | | | |
| 14 | Lack (PU) | 2 g/m² | PE | 18 g/m² | COC | 20 µm | PE | 18 g/m² |
| 15 | Lack (PU) | 2 g/m² | PP | 15 g/m² | COC | 25 µm | PP | 15 g/m² |
| 16 | Lack (PU) | 2 g/m² | oPP | 8 µm | PS | 30 µm | | |

Bei Folien ist die Foliendicke in µm, bei Beschichtungen das Flächengewicht in g/m² angegeben.

Die in der Tabelle enthaltenen Beispiele stellen bloss eine Auswahl bevorzugter Deckfolien dar. Die Erfindung ist nicht auf die genannten Beispiele begrenzt.

Zur Unterstützung und Verbesserung der Verbundhaftung der Lacke, Haftvermittler oder Kaschierkleber zwischen den Kunststofffolien oder von extrudierten Schichten, ist es oft zweckmässig den Folien auf den Kleber zugewandten Seiten oder den Extrudaten eine ausreichende Oberflächenspannung zu vermitteln. Die Erhöhung der Oberflächenspannung kann vorzugsweise durch eine lonisierungs-, Ozon-, Plasma-, Flamm- oder eine Koronavorbehandlung erfolgen.

Auf der Aussenseite, bezogen auf den später mit der Deckfolie verschlossenen Behälter kann die Deckfolie mit einem gegebenenfalls überlackierten Druckmuster versehen sein. Das Druckmuster kann auch zwischen zwei durchsichtigen Kunststofffolien als Konterdruck ausgeführt sein. Es kann auch die Aussenseite der Deckfolie mit einem Lack versehen werden, wobei der Lack fallweise auch bedruckt sein kann und/oder auf den Abpackanlagen bedruckbar ist.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: den Schichtaufbau einer ersten Deckfolie;
- Fig. 2: den Schichtaufbau einer zweiten Deckfolie;
- Fig. 3: den Schichtaufbau einer dritten Deckfolie;
- Fig. 4: den Schichtaufbau einer vierten Deckfolie;
- Fig. 5: die Draufsicht auf ein Blisterbodenteil;
- Fig. 6: den Schnitt durch das Blisterbodenteil von Fig. 5 nach der Linie I-I;
- Fig. 7: das Blisterbodenteil von Fig. 5 mit aufgesiegelter Durchdrückfolie bzw. einer peelbaren Deckfolie.

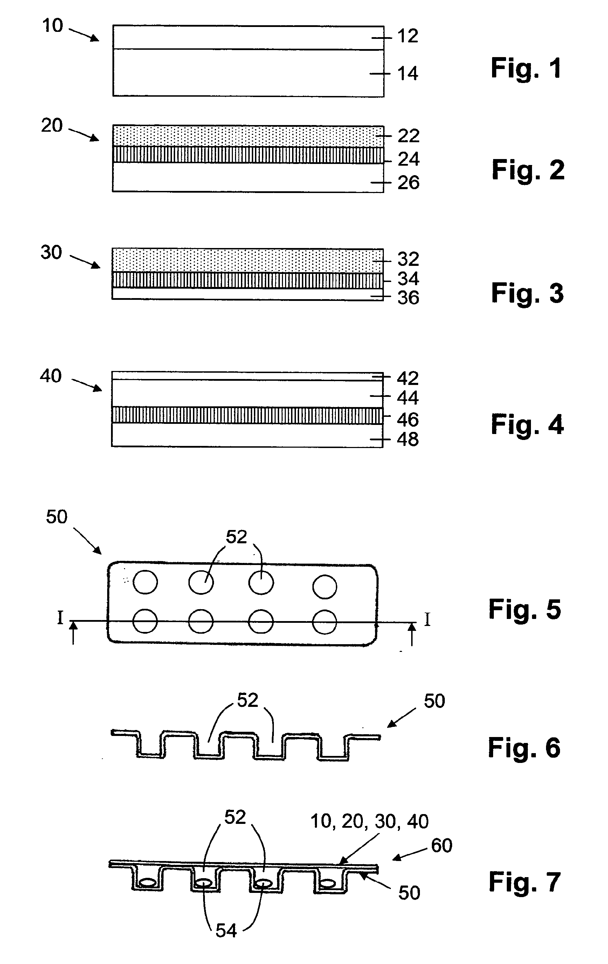

Eine in Fig. 1 gezeigte erste Deckfolie 10 für Blisterverpackungen weist den Schichtaufbau Nr. 1 gemäss Tabelle auf:
- 12: Aussenschicht aus PET
- 14: Siegelschicht aus PVC

Der PET-Film 12 bildet die spätere Aussenseite und die Siegelschicht 14 die Innenseite der auf ein Blisterbodenteil gesiegelten Deckfolie 10. Das Blisterbodenteil besteht z.B. aus PVC.

Eine in Fig. 2 gezeigte zweite Deckfolie 20 für Blisterverpackungen weist den Schichtaufbau Nr. 10 gemäss Tabelle auf:
- 22: Aussenschicht aus Papier
- 24: Zwischenschicht aus PVDC
- 26: Siegelschicht aus PE

Die Papierschicht 22 bildet die spätere Aussenseite und die Siegelschicht 26 die Innenseite der auf ein Blisterbodenteil gesiegelten Deckfolie 20. Das Blisterbodenteil besteht z.B. aus PP.

Eine in Fig. 3 gezeigte dritte Deckfolie 30 für Blisterverpackungen weist den Schichtaufbau Nr. 12 gemäss Tabelle auf:
- 32: Aussenschicht aus Papier, gestrichen
- 34: Zwischenschicht aus PET
- 36: Siegelschicht aus PP- Lack

Die Papierschicht 32 bildet die spätere Aussenseite und die Siegelschicht 36 die Innenseite der auf ein Blisterbodenteil gesiegelten Deckfolie 30. Das Blisterbodenteil besteht z.B. aus PP.

Eine in Fig. 4 gezeigte vierte Deckfolie 40 für Blisterverpackungen weist den Schichtaufbau Nr. 14 gemäss Tabelle auf:
- 42: Aussenschicht aus einem PU-Lack
- 44: erste Zwischenschicht aus PE
- 46: zweite Zwischenschicht aus COC
- 48: Siegelschicht aus PE

Die PU-Lackschicht 42 bildet die spätere Aussenseite und die Siegelschicht 48 die Innenseite der auf ein Blisterbodenteil gesiegelten Deckfolie 40. Das Blisterbodenteil besteht z.B. aus PP.

Ein in Fig. 5 gezeigtes, durch Thermoformung hergestelltes Blisterbodenteil 50 weist napfförmige Behältnisse oder Näpfe 52 zur Aufnahme von beispielsweise Tabletten 54 auf.

Wie in den Fig. 6 und 7 dargestellt, wird nach dem Befüllen der Näpfe 52 mit Tabletten 54 zur Bildung einer Blisterpackung 60 je nach Bedarf eine durchdrückbare oder eine peelbare Deckfolie 10, 20, 30, 40 auf das Blisterbodenteil 50 aufgesiegelt.

## Patentansprüche

1. Blisterverpackung mit einem wenigstens ein Behältnis (52) zur Aufnahme eines Füllgutes (54) aufweisenden Bodenteil (50) und einer gegen das Bodenteil (50) gesiegelten und das wenigstens eine Behältnis (54) verschliessenden Deckfolie (10, 20, 30, 40),
**dadurch gekennzeichnet, dass**
die Deckfolie (10, 20, 30, 40) ein Trägermaterial aus Papier und/oder Kunststoff aufweist und metallfolienfrei ist.

2. Blisterverpackung nach Anspruch 1, **dadurch gekennzeichnet, dass** die Deckfolie (20, 30) ein Trägermaterial (22, 32) aus Papier und eine Siegelschicht (26, 36) aus PVC, PVDC, COC, COP, Polypropylen, Polyethylen, PE/PBU, PE-Metallozen, PP-Metallozen, Aclar^{®} , Polyester, Polyamid, Polystyrol, Polyacrylnitril (Barex^{®}), lonomer, z.B. Surlyn^{®}, Bynel^{®}, Polymer aus nachwachsenen Rohstoffen, PEN, Polycarbonat, Acrylat, Lack oder einer organischen Beschichtung, z.B. Apeel^{®}, aufweist.

3. Blisterverpackung nach Anspruch 1, **dadurch gekennzeichnet, dass** die Deckfolie (10, 40) als Trägermaterial (12, 44) und gegebenenfalls als Siegelschicht (14, 48) wenigstens eine Schicht aus PVC, PVDC, COC, COP, Polypropylen, Polyethylen, PE-Metallozen, PP-Metallozen, Aclar^{®} , Polyester, Polyamid, Polystyrol, Polyacrylnitril (Barex^{®}), einem lonomer, z.B. Surlyn^{®}, Bynel^{®}, einem Polymer aus nachwachsenen Rohstoffen, PEN, Polycarbonat, Acrylat, Lack oder einer organischen Beschichtung, z.B. Apeel^{®}, aufweist.

4. Blisterverpackung nach einem der Ansprüche 1 bis 3, **dadurch gekennzeichnet, dass** der gesiegelte Behälter bei transparenten Ausführungen und entsprechender Wahl der Folien oder Folienkombinationen UVsterilisierbar ist.

5. Verwendung einer Blisterverpackung (60) nach einem der vorangehenden Ansprüche für kosmetische, pharmazeutische und medizinaltechnische Produkte, Diagnostika oder Nahrungsergänzungsmittel.
